# EUROPEAN PATENT APPLICATION

(11) **EP 4 340 058 A1**
(43) Date of publication of application: **20.03.2024**
(21) Application number: 22867695.3
(22) Date of filing: 07.09.2022
(51) Int. Cl.: H01M 4/134, H01M 4/1395, H01M 10/42, H01M 10/052

(54) **BATTERY COMPRISING COMPOSITE ELECTRODE PROTECTIVE LAYER, AND MANUFACTURING METHOD THEREFOR**

(30) Priority: 09.09.2021 KR 20210120604
(71) Applicant: Samsung Electronics Co., Ltd., Suwon-si, Gyeonggi-do 16677 (KR)
(72) Inventor: CHOI, Woongchul, Suwon-si, Gyeonggi-do 16677 (KR)
(74) Representative: Gulde & Partner
(86) International application number: PCT/KR2022/013439
(87) International publication number: WO 2023/038427

(57) **Abstract**

A battery including a composite electrode protection layer and a method for manufacturing the same are disclosed. The battery according to various embodiments of the disclosure may include a negative electrode that includes a current collector containing a conductive material, an anode active material positioned on a surface of the current collector and containing metallic lithium, and a protection layer covering an exposed surface of the anode active material, and wherein the protection layer may include a polymer-ceramic composite material containing an ultraviolet cured resin or electron-beam cured resin and a ceramic.

## Description

### [Technical Field]

Various embodiments disclosed in this document relate to a battery and, more particularly, to a battery including a composite electrode protection layer and a method of manufacturing the same.

### [Background Art]

With recent advancement of portable electronic devices and electric vehicles, secondary batteries capable of storing and outputting electric energy are widely used. Lithium-ion batteries are secondary batteries that are light, have high energy density, and have good charge-discharge characteristics, and are widely used in fields such as portable electronic devices, electric vehicles, and energy storage systems (ESS).

A lithium-ion battery includes a negative electrode that releases lithium ions into the electrolyte during discharge, and a positive electrode that absorbs lithium ions released from the negative electrode in an oxidized state during discharge. An anode material having a microstructure to store lithium, such as graphite, synthetic graphite, or silicon oxide, is commonly used for the negative electrode. A metallic anode material being pure metallic lithium or an alloy containing it can have a relatively high capacity, but has a disadvantage that lithium metal precipitated during charging forms dendritic crystals to destroy the separator diaphragm and cause a high risk of an internal short circuit.

### [Disclosure of Invention]

### [Technical Problem]

To prevent the formation of dendrites in a battery using a lithium metal anode material, the negative electrode may include a protection layer including a polymer formed on the lithium metal surface. However, in the process of applying a polymer solution on the surface of the lithium metal negative electrode, the solvent contained in the polymer solution may react with the lithium metal to generate side products, or the lithium metal may ignite due to heating in the drying process of the solvent. Further, the polymer that can be applied by dissolving in a solvent has poor heat resistance, so the protection layer may be damaged when the battery generates heat.

Various embodiments disclosed in this document may provide a battery including a protection layer that is formed on the surface of a metal anode material without solvent drying and has high heat resistance.

In addition, various embodiments disclosed in this document may provide a method of manufacturing a battery including a protection layer having the above-described characteristics.

### [Solution to Problem]

A battery according to various embodiments of the disclosure may include a negative electrode that includes a current collector containing a conductive material, an anode active material positioned on a surface of the current collector and containing metallic lithium, and a protection layer covering an exposed surface of the anode active material, and wherein the protection layer may include a polymer-ceramic composite material containing an ultraviolet cured resin or electron-beam cured resin and a ceramic. In some embodiments, the ultraviolet cured resin may include at least one of polyisoimide, polyester, epoxy acrylate, urethane acrylate, or polyester acrylate, and may be cured using at least one of benzoin ethyl ether, benzophenone, or acetophenone as an initiator.

In some embodiments, the electron-beam cured resin may include at least one of polyolefin, polyimide, polyisoimide, polyester, epoxy acrylate, urethane acrylate, or polyester acrylate.

In some embodiments, the ceramic of the protection layer may include at least one of aluminum oxide, aluminum oxide hydroxide, or magnesium hydroxide. In some embodiments, the particle size of the ceramic of the protection layer may be 0.1 to 5 micrometers. In some embodiments, the thickness of the protection layer may be **1 to 50 micrometers.**

In some embodiments, the content of the ceramic in the polymer-ceramic composite material may be 10 to 50 weight percent.

In some embodiments, the protection layer may include a polymer containing a vinylene carbonate monomer.

A method for manufacturing a negative electrode of a battery according to another embodiment of the disclosure may include: mixing an ultraviolet cured resin or electron-beam cured resin with a ceramic to prepare a slurry; applying the slurry for a protection layer on a current collector containing a conductive material and an exposed surface of a metallic anode active material positioned on a surface of the current collector and containing metallic lithium, and adjusting a thickness of the slurry; and curing the ultraviolet cured resin or electron-beam cured resin of the slurry by irradiating ultraviolet rays or electron beams to the applied slurry to form the protection layer.

In some embodiments, the ultraviolet cured resin may include a cured polymer including at least one of polyisoimide, polyester, epoxy acrylate, urethane acrylate, or polyester acrylate, and an initiator including at least one of benzoin ethyl ether, benzophenone, or acetophenone. In some embodiments, the slurry may include 50 to 80 weight percent of the cured polymer, 0.1 to 5 weight percent of the initiator, and 15 to 45 weight percent of the ceramic.

In some embodiments, the electron-beam cured resin may include a cured polymer including at least one of polyolefin, polyimide, polyisoimide, polyester, epoxy acrylate, urethane acrylate, or polyester acrylate. In some embodiments, the slurry may include 50 to 90 weight percent of the cured polymer and 10 to 50 weight percent of the ceramic.

In some embodiments, the slurry may include a vinylene carbonate monomer. In some embodiments, the thickness of the protection layer may be **0.1 to 50 micrometers.** In some embodiments, applying and adjusting may include adjusting the thickness of the slurry through a doctor blade.

In some embodiments, applying and adjusting may include adjusting the thickness of the slurry by pressing the slurry with a roll. In some embodiments, the curing time at curing the resin may be within 1 minute. In some embodiments, the irradiation intensity of ultraviolet rays at curing the resin may be 500 to 5000 mJ/cm². In another embodiment, the electron's kinetic energy of electron beams at curing the resin may be 50 to 500 keV.

### [Advantageous Effects of Invention]

According to various embodiments disclosed in this document, it is possible to provide a battery having improved heat resistance and reduced fire risk while realizing a high capacity and high output of the UV cured polymer.

In addition, it is possible to provide a method for manufacturing a battery in which the risk of fire in the process is reduced by omitting the drying process of the solvent based on a side reaction between the solvent and the lithium metal.

### [Brief Description of Drawings]

In connection with the description of the drawings, the same or similar reference symbols may be used for the same or similar components.
FIG. 1 is a cross-sectional perspective view schematically illustrating the structure of a battery according to various embodiments.
FIG. 2 is a view showing a cross-section of the negative electrode of a battery according to embodiments of the disclosure.
FIG. 3 is a flowchart illustrating a method for manufacturing a negative electrode of the battery according to embodiments of the disclosure.
FIGS. 4A to 4D are conceptual diagrams illustrating a manufacturing process of a negative electrode of the battery according to embodiments of the disclosure.

### [Mode for the Invention]

Hereinafter, preferred embodiments of the disclosure will be described in detail with reference to the accompanying drawings. In the drawings, for example, the size and shape of the members may be exaggerated for convenience and clarity of description, and variations of the illustrated shapes may be expected in actual implementation. Accordingly, embodiments of the disclosure should not be construed as being limited to the specific shapes of the regions shown in the specification.

Reference symbols assigned to members in the drawings refer to the same members throughout the drawings. Also, as used herein, the term "and/or" includes any one of listed items and all combinations thereof.

The embodiments of the disclosure are provided to more completely explain the disclosure to those of ordinary skill in the art, the following embodiments may be modified in various forms, and the scope of the disclosure is not limited to the following embodiments. Rather, these embodiments are provided to make the disclosure more thorough and complete and fully convey the subject matter of the disclosure to those skilled in the art.

The terminology used in the specification is used to describe the embodiments, and is not intended to limit the scope of the disclosure. Also, the singular forms in the specification are intended to include the plural forms as well, unless the context clearly indicates otherwise. In addition, the terms "comprise" and/or "comprising" used in this specification specify the presence of stated features, numbers, steps, operations, members, elements, and/or groups thereof, but do not preclude the presence or addition of other features, numbers, steps, operations, members, elements, and/or groups thereof.

In this specification, relative terms such as "below", "above", "upper", "lower", "horizontal" or "vertical" may be used to describe the relationship that one component, layer or region has with another component, layer or region as shown in the drawings. It should be understood that these terms encompass not only the direction indicated in the drawings but also other directions.

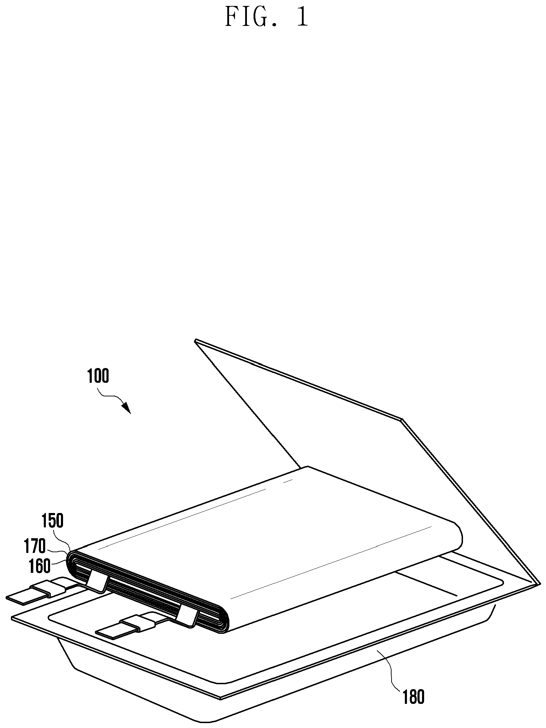

FIG. 1 is a cross-sectional perspective view schematically illustrating the structure of a battery according to various embodiments.

Referring to FIG. 1, the battery 100 may include a positive electrode 160, a negative electrode 150, and a separator 170. The positive electrode 160 may be an electrode that serves as a cathode when the battery being discharged and absorbs lithium ions from an electrolyte to form a lithium compound. The lithium compound may be an oxide such as lithium cobalt oxide (LixCoO₂), lithium nickel oxide (LixNiO₂), lithium nickel cobalt oxide (Lix(NiCo)O₂), lithium nickel cobalt manganese oxide (Lix(NiCoMn)O₂), lithium nickel cobalt aluminum oxide (Lix(NiCoAl)O₂), spinel lithium manganese oxide (LixMn₂O₄), manganese dioxide (MnO₂), or an olivine-type compound such as lithium iron phosphate (LixFePO₄), lithium manganese phosphate (LixMnPO₄).

The negative electrode 150 may be an electrode that serves as an anode when the battery is discharged and releases lithium ions to the electrolyte, and serves as a cathode during charging and stores reduced lithium atoms. A detailed configuration of the negative electrode 150 will be described later.

The separator 170 may be a member that prevents electrical contact between the positive electrode 160 and the negative electrode 150 while allowing lithium ions to pass therethrough. In some embodiments, the separator 170 may include a polymer material, such as polyethylene or polypropylene, having micropores of a size that allows lithium ions to pass therethrough.

The battery case 180 may be a container having an internal space in which the negative electrode 150, the positive electrode 160, and the separator 170 are accommodated in a wound, folded, or stacked form. The battery case may include a metal material (e.g., aluminum or stainless steel), a ceramic material, and/or a polymer material. In FIG. 1, the battery case 180 is shown to have a polyhedral shape (usually referred to as 'prismatic' shape), but this is illustrative; the battery case 180 may have various form factors such as a cylindrical shape, a pouch shape, or a coin shape.

An organic electrolyte (not shown) may be injected into the battery case 180 and sealed. The organic electrolyte may include a lithium salt and an organic solvent. The lithium salt may be LiPF₆, LiBF₄, LiSbF₆, LiAsF₆, LiN(SO₂C₂F₅)₂, Li(CF3SO₂)₂N, LiN(SO₃C2F₅)₂, LiC₄F₉SO₃, LiClO₄, LiAlOz, LiAlCl₄, LiCl, LiI , LiB(C₂O₄)₂, or a mixture thereof.

The organic solvent may include a cyclic carbonate such as ethylene carbonate, butylene carbonate or vinylene carbonate, a linear carbonate such as dimethyl carbonate, methyl ethyl carbonate or diethyl carbonate, or an acetate-based compound such as methyl acetate, ethyl acetate, or propyl acetate.

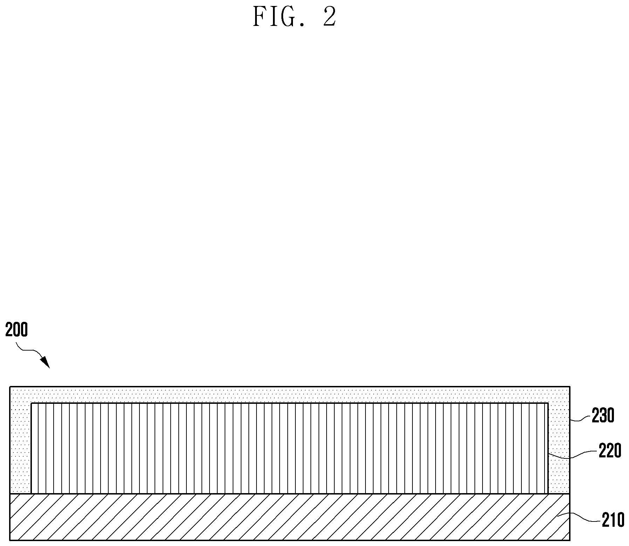

FIG. 2 is a view showing a cross-section of the negative electrode 200 of a battery according to embodiments of the disclosure.

Referring to FIG. 2, the negative electrode 200 of the battery (e.g., battery 100 in FIG. 1) may include a current collector 210, a metallic anode active material 220, and a protection layer 230.

The current collector 210 may be a conductor for transporting electrons in and out according to a chemical reaction occurring in the negative electrode 200. The current collector 210 may include copper, aluminum, nickel, or a combination or alloy thereof, which is processed into a foil. In some embodiments, the current collector 210 may be a foil whose surface is plated with the above-described conductor.

The metallic anode active material 220 may be positioned on the surface of the current collector 210 and may be a material in which lithium is reduced and stored during battery charging and lithium ions are released into the electrolyte due to oxidation of lithium during discharge. In some embodiments, the metallic anode active material 220 may include metallic lithium. In another embodiment, the metallic anode active material 220 may be an alloy obtained by alloying metallic lithium with elements such as beryllium, magnesium, calcium, barium, aluminum, indium, silicon, germanium, lead, antimony, zinc, or tin. The metallic anode active material 220 in which lithium is stored in metallic state has an advantage in that the energy density and output density are higher compared with an anode active material in which lithium is stored by intercalation such as graphite.

The protection layer 230 may be positioned on the surface of the metallic anode active material 220 so as to cover the exposed surface of the metallic anode active material 220. The protection layer 230 may be a member that blocks dendrite or spike-like growth of metallic lithium while allowing passage of lithium ions with respect to the metallic anode active material 220.

The protection layer 230 may include a polymer-ceramic composite material containing UV and/or e-beam cured resin and a ceramic. The polymer-ceramic composite material may have excellent strength and elasticity derived from the resin material, and excellent hardness derived from the ceramic, and can reduce damage to the battery caused by metallic lithium having a dendrite or spike shape penetrating the protection layer 230.

The UV cured resin may include at least one of polyisoimide, polyester, epoxy acrylate, urethane acrylate, or polyester acrylate, and may have been polymerized and crosslinked by UV light using benzoin ethyl ether, benzophenone, and acetophenone as an initiator. The e-beam cured resin may include at least one of polyolefin (such as polyethylene and/or polypropylene), polyimide, polyisoimide, polyester, epoxy acrylate, urethane acrylate, or polyester acrylate. Since UV or e-beam cured resin has high heat resistance, physical damage can be reduced when the secondary battery generates high output and high heat.

In some embodiments, the polymer-ceramic composite material may include a polymer containing a vinylene carbonate monomer. As vinylene carbonate has a high polarity, it is possible to increase the lithium ion conductivity of the polymer-ceramic composite material. In some embodiments, the vinylene carbonate monomer may be included as a copolymer in the UV or e-beam cured resin. By copolymerizing vinylene carbonate, the swelling property of polyvinylene carbonate may be reduced.

The ceramic may include an inorganic material having sufficient hardness and chemical stability, for example, at least one of aluminum oxide (Al₂O₃), aluminum oxide hydroxide (AlO(OH)), or magnesium hydroxide (Mg(OH)₂). In some embodiments, the ceramic may have a particle size between 0.1 and 5 micrometers.

In some embodiments, the thickness of the protection layer 230 may be 1 to 50 micrometers. When the thickness of the protection layer 230 is 1 micrometer or less, as the rigidity of the protection layer 230 is insufficient, the protection layer 230 may be penetrated by metallic lithium in the form of dendrites or spikes; when the thickness of the protection layer 230 exceeds 50 micrometers, as the internal resistance of the battery becomes excessive owing to the protection layer 230, the battery output may be reduced and heat generation may increase.

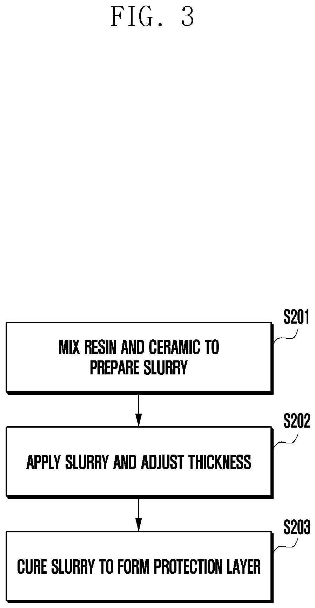

FIG. 3 is a flowchart illustrating a method for manufacturing a negative electrode 200 of the battery according to embodiments of the disclosure.

Referring to FIG. 3, the method for manufacturing the negative electrode 200 of a battery according to embodiments of the disclosure may include mixing operation S201, protection layer application and thickness adjustment operation S202, and curing operation S203.

Mixing operation S201 may be a step of preparing a slurry by mixing a UV or e-beam cured resin and a ceramic, which are raw materials of the protection layer 230. At mixing operation S201, a ball mill, a kneader machine, or similar well-known means may be used to mix the UV or e-beam cured resin and the ceramic.

In some embodiments, when the protection layer 230 includes a UV cured resin, the slurry may include at least one of polyisoimide, polyester, epoxy acrylate, urethane acrylate, or polyester acrylate as a cured polymer material, and include at least one of benzoin ethyl ether, benzophenone, or acetophenone as a photoinitiator. In some embodiments, the slurry may include 0.1 to 5 weight percent of a photoinitiator, 50 to 80 weight percent of a cured polymer material, and 15 to 45 weight percent of a ceramic.

In another embodiment, when the protection layer 230 includes an e-beam cured resin, the slurry may include, as a cured polymer material, at least one of polyolefin (e.g., polyethylene and/or polypropylene), polyimide, polyisoimide, polyester, epoxy acrylate, urethane acrylate, or polyester acrylate. In some embodiments, **the slurry** may include 50 to 90 weight percent of a cured polymer material and 10 to 50 weight percent of a ceramic.

In some embodiments, the slurry includes a vinylene carbonate monomer. The vinylene carbonate monomer may be combined with another polymer material of the UV or e-beam cured resin to form polyvinylene carbonate and polyvinylene carbonate-based copolymer. Vinylene carbonate may increase the ionic conductivity of the protection layer 230 with respect to lithium ions.

Protection layer application and thickness adjustment operation S202 may be a step of applying the slurry generated in mixing operation S201 on the exposed surface of the active material of the metal negative electrode 200, and adjusting the thickness of the applied slurry. Protection layer application and thickness adjustment operation S202 may utilize a well-known technique such as a hopper 320 or a slurry dam 323 for transferring the slurry and applying it to the metal surface. Technical means for adjusting the thickness of the slurry will be described later.

Curing operation S203 may be a step of curing the UV or e-beam cured resin of the applied slurry. In some embodiments, the cured polymer included in the slurry may include an UV cured resin, and curing operation S203 may include a step of irradiating ultraviolet rays to the slurry. Ultraviolet rays may be emitted from an ultraviolet light source 330. In another embodiment, the cured polymer included in the slurry may include an e-beam cured resin, and curing operation S203 may include a step of irradiating electron beams to the slurry. Electron beams may be emitted from an electron source 340 such as an electron beam accelerator.

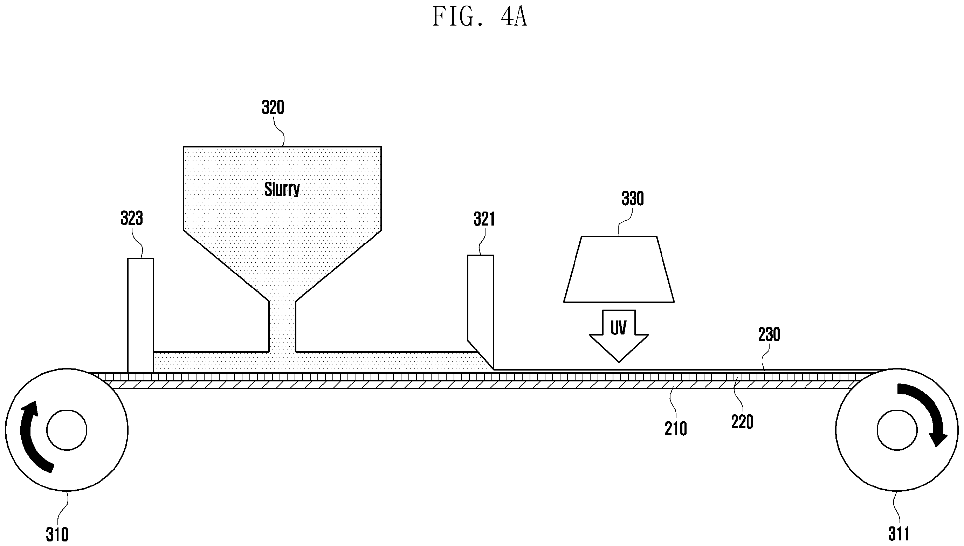

FIGS. 4A to 4D are conceptual diagrams illustrating a manufacturing process of the negative electrode 200 of a battery according to embodiments of the disclosure.

Referring to FIGS. 4A to 4D, the negative electrode 200 of the battery may be manufactured by a process in which the current collector 210 in foil form to which the metallic anode active material 220 wound on the unwinding roll 310 is bonded is unwound from the unwinding roll 310, the pre-mixed slurry is applied on the surface of the metallic anode active material 220, thickness-adjusted, and cured to form the protection layer 230, and the completed negative electrode 200 is wound on the winding roll 311. In some embodiments, the metallic anode active material 220 may be bonded in advance to the surface of the current collector 210 in foil form by sintering or plating, and the current collector 210 to which the metallic anode active material 220 is bonded may be provided in a state of being wound on the unwinding roll 310 to the manufacturing process.

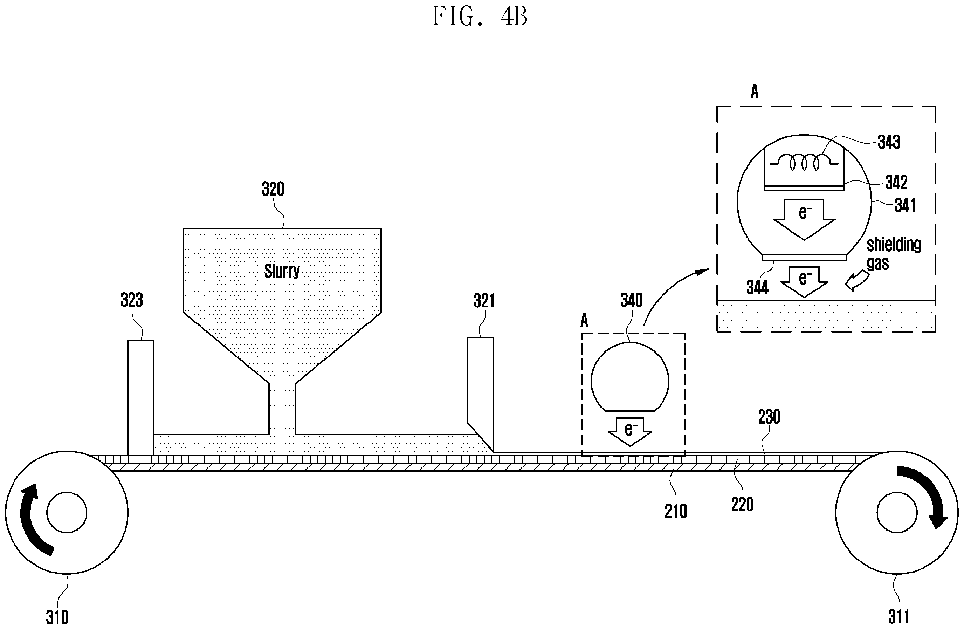

Referring to FIGS. 4A and 4B, in some embodiments, the thickness of the slurry may be adjusted by a doctor blade 321 (also referred to as a ductor blade) on the material of the negative electrode 200. In some embodiments, the slurry may be supplied by means of, for example, a hopper 320 into a space closed on all sides by a structure of the doctor blade 321 and a slurry dam 323, and the slurry may be discharged through a gap between the doctor blade 321 and the surface of the metallic anode active material 220 and molded to coat the surface of the metallic anode active material 220.

The doctor blade 321 may be a member having an edge having a high straightness capable of precisely adjusting the height from the surface of the metallic anode active material 220. The height of the doctor blade 321 may be set in consideration of a swelling caused by entropy elasticity of a polymer included in the slurry and a volume change due to the curing reaction in addition to the thickness of the protection layer 230.

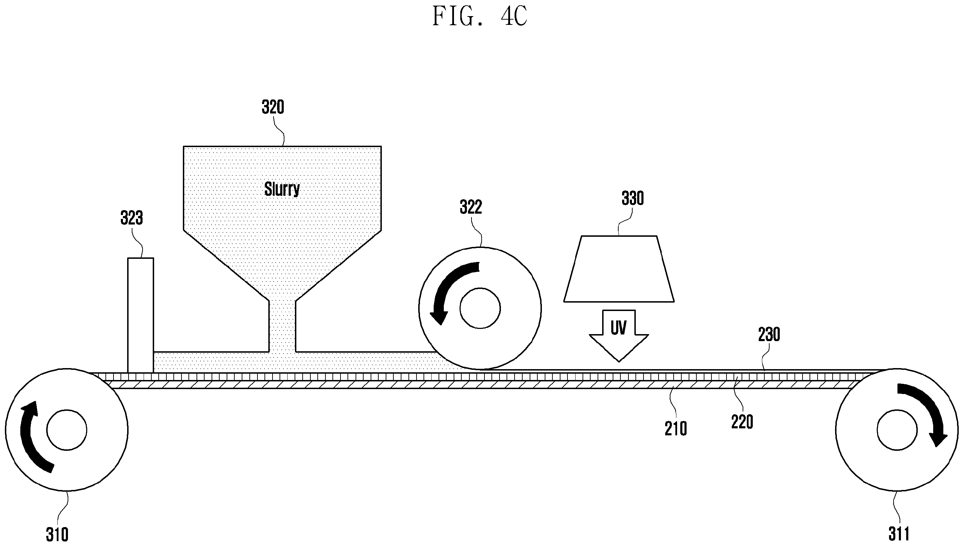

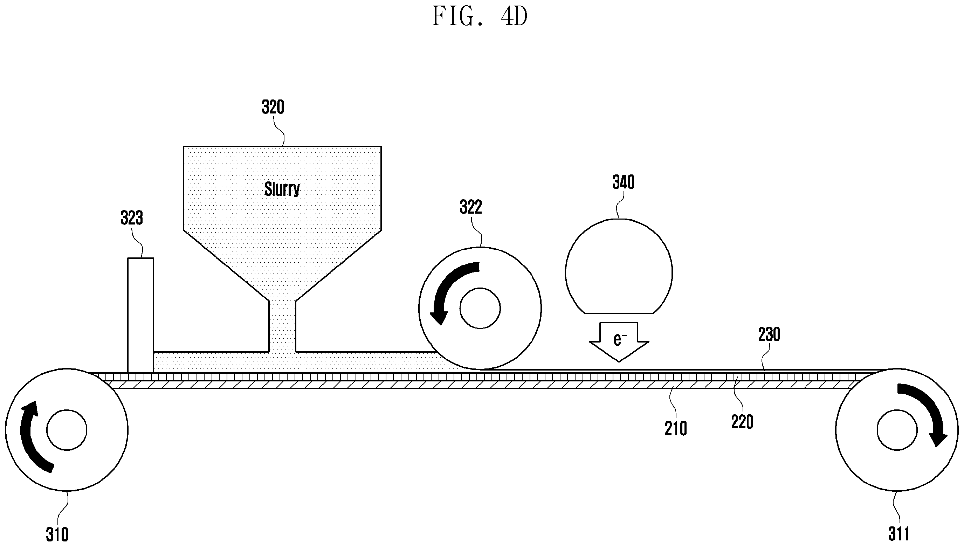

Referring to FIGS. 4C and 4D, in another embodiment, the thickness of the slurry may be adjusted by a roll 322. In some embodiments, the slurry may be supplied into a space closed on all sides by a structure of the roll 322 and the dam 323, and the slurry may be discharged through a gap between the roll 322 and the surface of the metallic anode active material 220 while being stretched and reduced by the roll 322 and molded to coat the surface of the metallic anode active material 220. The roll 322 may apply a rolling force against the slurry. The roll 322 has an effect of compacting ceramic particles of the slurry with each other by applying a rolling force to the slurry. The height, diameter, and circumferential speed of the roll 322 may be adjusted for an appropriate rolling force. The height of the roll 322 may be set in consideration of a swelling caused by entropy elasticity of a polymer included in the slurry and a volume change due to the curing reaction in addition to the thickness of the protection layer 230.

Referring to FIGS. 4A and 4C, in some embodiments, the slurry may include a UV-cured resin, and the slurry applied on the metallic anode active material 220 may be cured by ultraviolet rays emitted from the ultraviolet light source 330. The ultraviolet light source 330 may include a light source such as a mercury lamp, an ArF excimer, a KrF excimer, or an ultraviolet light emitting diode (UV LED). Curing may occur by a photoinitiator generating radicals or cations due to ultraviolet rays to polymerize monomers, oligomers or polymers, and cross-linking a plurality of polymer chains.

The irradiation energy of ultraviolet rays can be adjusted according to the type of UV cured resin, the processing time, and the thickness of the slurry. In some embodiments, the UV irradiation energy may have a value of 500 to 5000 mJ/cm² It is possible to cure the protection layer 230 within 1 minute with the above-mentioned UV irradiation energy. When the UV irradiation energy is less than 500 mJ/cm², it was not possible to cure the slurry forming a 50 micrometer protection layer 230 within 1 minute.

Referring to FIGS. 4B and 4C, in another embodiment, the slurry may include an e-beam cured resin, and the slurry applied on the metallic anode active material 220 may be cured by electron beams (e⁻) emitted from the electron source 340. In electron beam curing, since high-energy electrons generate radicals to initiate polymerization and cross-linking reactions, unlike UV-cured resins, there may be an advantage in that there is no need to separately add a photoinitiator.

Referring to FIG. 4B, the electron source 340 may be an electron accelerator. The electron accelerator may be a device that accelerates electrons emitted from the cathode 342 by applying a high voltage to the cathode 342 inside the vacuum tube 341 and irradiates the electrons to the object to be cured through the window 344 capable of transmitting electrons.

The cathode 342 may be a hot cathode 342 that emits thermal electrons by heating the filament 343, or a cold cathode 342 that emits electrons through field emission caused by a strong electric field concentrated in a region having a small **curved radius**. Electrons emitted from the cathode 342 may be accelerated by a potential difference between the window 344 and the cathode 342. The kinetic energy of electrons imparted by the potential difference between the window 344 and the cathode 342 may be 50 to 500 keV. When the kinetic energy of electrons was out of the above range, it was not possible to cure the protection layer 230 within 1 minute.

The window 344 may include a thin metal sheet, such as a thin titanium sheet, capable of transmitting electrons while maintaining the vacuum of the vacuum tube 341. Some of the electrons reaching the window 344 may be absorbed or reflected by the window 344, and the remaining electrons may pass through the window 344 to reach the surface of the slurry.

In some embodiments, to suppress the generation of ozone caused by the collision of electrons with oxygen molecules in the atmosphere and the resulting side reactions, a shielding gas with low chemical activity, such as nitrogen, an inert gas (elements of Group 18 on the periodic table), or a mixture thereof, may be jetted between the electron source 340 and the surface of the slurry.

In the above-described manufacturing process of the negative electrode of a battery, as the lithium metal is coated by the slurry or the protection layer 230, exposure of the lithium metal to the air can be minimized, thereby reducing oxidation and contamination of the lithium metal in process; as the slurry does not contain a solvent for dissolving a polymer, it is possible to reduce the loss of lithium metal (e.g., dead lithium) due to a side reaction between the organic solvent and lithium metal; as the slurry is cured by ultraviolet rays or electron beams, a heating process for drying the solvent is omitted, so that the risk of ignition of lithium metal by heating can be reduced. In addition, since it has a short curing time, the process time can be shortened and productivity can be improved.

Meanwhile, the embodiments of this document disclosed in the present specification and drawings are provided for specific examples to easily explain the technical contents according to the embodiments disclosed in this document and to help the understanding of the embodiments disclosed in this document, and are not intended to limit the scope of the embodiments disclosed in this document. Accordingly, the scope of various embodiments disclosed in this document should be construed to include both the embodiments disclosed in this document and all changes or modifications derived based on the technical spirit of the embodiments disclosed in this document.

## Claims

1. A battery comprising a negative electrode,
Wherein the negative electrode comprises:
a current collector containing a conductive material,
an anode active material positioned on a surface of the current collector and containing metallic lithium,
and a protection layer covering an exposed surface of the anode active material, the protection layer includes a polymer-ceramic composite material containing an ultraviolet cured resin or an electron-beam cured resin and a ceramic.

2. The battery of claim 1, wherein the ultraviolet cured resin includes at least one of polyisoimide, polyester, epoxy acrylate, urethane acrylate, or polyester acrylate, and
Wherein the ultraviolet cured resin is cured using at least one of benzoin ethyl ether, benzophenone, or acetophenone as an initiator.

3. The battery of claim 1, wherein the electron-beam cured resin includes at least one of polyolefin, polyimide, polyisoimide, polyester, epoxy acrylate, urethane acrylate, or polyester acrylate.

4. The battery of claim 1,
wherein a content of the ceramic in the polymer-ceramic composite material is 10 to 50 weight percent,
wherein a thickness of the protection layer is 1 to 50 micrometers, and
wherein the ceramic of the protection layer includes at least one of aluminum oxide, aluminum oxide hydroxide, or magnesium hydroxide and a particle size of the ceramic of the protection layer is 0.1 to 5 micrometers.

5. The battery of claim 1, wherein the protection layer includes a polymer containing a vinylene carbonate monomer.

6. A method for manufacturing a negative electrode of a battery, the method comprising:
mixing an ultraviolet cured resin or electron-beam cured resin with a ceramic to prepare a slurry;
applying the slurry for a protection layer on a current collector containing a conductive material and an exposed surface of a metallic anode active material positioned on a surface of the current collector and containing metallic lithium, and adjusting a thickness of the slurry; and
curing the ultraviolet cured resin or electron-beam cured resin of the slurry by irradiating ultraviolet rays or electron beams to the applied slurry to form the protection layer.

7. The method of claim 6, wherein the ultraviolet cured resin includes a cured polymer including at least one of polyisoimide, polyester, epoxy acrylate, urethane acrylate, or polyester acrylate, and an initiator including at least one of benzoin ethyl ether, benzophenone, or acetophenone
and wherein the slurry includes 50 to 80 weight percent of the cured polymer, 0.1 to 5 weight percent of the initiator, and 15 to 45 weight percent of the ceramic.

8. The method of claim 6, wherein the electron-beam cured resin includes a cured polymer including at least one of polyolefin, polyimide, polyisoimide, polyester, epoxy acrylate, urethane acrylate, or polyester acrylate,
and wherein the slurry includes 50 to 90 weight percent of the cured polymer and 10 to 50 weight percent of the ceramic.

9. The method of claim 6, wherein the slurry includes a vinylene carbonate monomer.

10. The method of claim 6, wherein a thickness of the protection layer is 1 to 50 micrometers.

11. The method of claim 6, wherein applying and adjusting comprises adjusting the thickness of the slurry through a doctor blade.

12. The method of claim 6, wherein applying and adjusting comprises adjusting the thickness of the slurry by pressing the slurry with a roll.

13. The method of claim 6, wherein a curing time at curing the resin is within 1 minute.

14. The method of claim 11, wherein irradiation intensity of ultraviolet rays at curing the resin is 500 to 5000 mJ/cm².

15. The method of claim 11, wherein electron's kinetic energy of electron beams at curing the resin is 50 to 500 keV.
